# EUROPÄISCHE PATENTANMELDUNG

(11) **EP 2 020 527 A2**
(43) Veröffentlichungstag der Anmeldung: **04.02.2009**
(21) Anmeldenummer: 08010857.4
(22) Anmeldetag: 14.06.2008
(51) Int. Cl.: F16F 1/38

(54) **Gummilager**

(30) Priorität: 02.08.2007 DE 102007036576
(71) Anmelder: Carl Freudenberg KG, 69469 Weinheim (DE)
(72) Erfinder: Kardoes, Hilrich, 21423 Winsen / Luhe (DE)

(57) **Zusammenfassung**

Gummilager (1), umfassend eine Hülse (2) und einen in der Hülse (2) angeordneten Kern (3) die durch einen Federkörper (4) miteinander verbunden sind, wobei der Kern (3) eine Verdickung (5) aufweist, wobei der Federkörper (4) und die Verdickung (5) in axialer Richtung beabstandet voneinander angeordnet sind.

## Beschreibung

### Technisches Gebiet

Die Erfindung betrifft ein Gummilager, umfassend eine Hülse und einen in der Hülse angeordneten Kern die durch einen Federkörper miteinander verbunden sind, wobei der Kern eine Verdickung aufweist.

### Stand der Technik

Ein derartiges Gummilager ist aus der EP 1 217 249 B1 bekannt. Dort ist ein Gummilager bestehend aus einer Hülse, die über einen Federkörper mit einem Kern verbunden ist, beschrieben. Der in der Hülse angeordnete Kern weist eine Verdickung auf und der Federkörper, der die Hülse mit dem Kern verbindet, ist dabei auch im Bereich der Verdickung angeordnet und wirkt dadurch mit dieser zusammen. Die Verdickung bewirkt bei dieser Ausgestaltung eine Vergrößerung der axialen Steifigkeit des Gummilagers in einer Richtung. Hierbei ist jedoch nachteilig, dass der Abstand zwischen Hülse und Kern groß ist und dass kein Anschlag zwischen Hülse und Kern vorgesehen ist. Dadurch werden große Belastungen vollständig über den Federkörper übertragen und es kommt bei großen Auslenkungen zu einer Überbelastung des Federkörpers und damit zu einer Verkürzung der Lebensdauer des Gummilagers.

### Darstellung der Erfindung

Der Erfindung liegt die Aufgabe zugrunde, ein Gummilager bereitzustellen, welches in radialer Richtung eine hohe Belastbarkeit aufweist.

Diese Aufgabe wird mit den Merkmalen von Anspruch 1 gelöst. Auf vorteilhafte Ausgestaltungen nehmen die Unteransprüche Bezug.

Zur Lösung der Aufgabe sind der Federkörper und die Verdickung in axialer Richtung beabstandet voneinander angeordnet. Bei dieser erfindungsgemäßen Ausgestaltung sind die Verdickung und der Federkörper funktionstechnisch voneinander getrennt. Das bedeutet, dass die Verdickung keinen Einfluss auf die Eigenschaften des Federkörpers hat. Die Verdickung verringert vielmehr wenigstens abschnittsweise Abstand zwischen Hülse und Kern und stellt dadurch einen Anschlagkörper dar, der eine Überlastung des Federkörpers durch große radiale Auslenkungen verhindert. Die Federungseigenschaften des Federkörpers werden vorwiegend durch die Ausgestaltung des Federkörpers selbst bestimmt. Die Verdickung hat hingegen keinen Einfluss auf die Federungseigenschaften.

Die Verdickung kann außenumfangsseitig mit einem Anschlagpuffer aus elastomerem Material versehen sein. Dazu ist die Verdickung mit einer Schicht aus elastomeren Material versehen. Diese verhindert metallische Berührungen zwischen Verdickung und Hülse, die zu Beschädigungen führen können. Durch die Dicke der Schicht kann die Art des Anschlages der Verdickung an der Hülse bestimmt werden, also ob die Verdickung hart oder weich anschlägt. Des Weiteren ergibt sich auch eine große Bindefläche des elastomeren Materials an dem Kern. Dies gilt insbesondere dann, wenn der Federkörper und der Anschlagpuffer materialeinheitlich und einstückig ausgebildet sind.

Die Hülse kann innenumfangsseitig mit einer Schicht aus elastomerem Material bedeckt sein. Diese Beschichtung stellt wie die Beschichtung des Kerns einen Anschlagpuffer dar. Je nach Anforderung kann die Beschichtung entweder nur an dem Kern, nur an der Hülse oder an Kern und Hülse vorgesehen sein. Auch bei dieser Ausgestaltung ergibt sich, insbesondere bei einem einstückig ausgebildeten Elastomer, eine große Bindefläche und damit eine hohe Stabilität.

Der Federkörper, der Anschlagpuffer und die Schicht können materialeinheitlich und einstückig ausgebildet sein. Dadurch ist das Gummilager kostengünstig und mit wenigen Arbeitsschritten herstellbar. Des Weiteren ist der Federkörper besonders stabil an Hülse und Kern angebunden.

Die Hülse kann an zumindest einer Stirnseite einen umlaufenden Bund aufweisen. Der umlaufenden Bund stellt einen weiteren Anschlag dar, der zu große Auslenkungen der Hülse in axialer Richtung abfängt. Der Bund kann durch umbördeln der Stirnseite der rohrförmigen Hülse hergestellt werden. Je nach Einbausituation kann der Bund den Kern in axialer Richtung überragen oder gegenüber dem Kern zurückstehen.

Der Bund kann mit einem Axial-Anschlagpuffer aus elastomerem Material versehen sein. Der Axial-Anschlagpuffer verhindert einen direkten metallischen Kontakt von Bund und Gegenkörper und schützt so vor Beschädigungen. Der Axial-Anschlagkörper kann einstückig und materialeinheitlich mit dem Federkörper, dem Anschlagpuffer und der Schicht ausgebildet sein.

Der Federkörper kann in axialer Richtung verlaufende Ausnehmungen aufweisen. Durch die Ausnehmungen kann die Federungseigenschaft des Federkörpers beeinflusst werden, wobei eine Ausnehmung zu weicheren Federungseigenschaften führt. Dabei können in einer Ausgestaltung vier gleichmäßig über den Umfang verteilte Ausnehmungen vorgesehen sein. Dabei sind die Ausnehmungen den Hauptbelastungsrichtungen zugeordnet.

### Kurzbeschreibung der Zeichnung

Ein Ausführungsbeispiel des erfindungsgemäßen Gummilagers wird nachfolgend anhand der schematischen Figur näher erläutert:

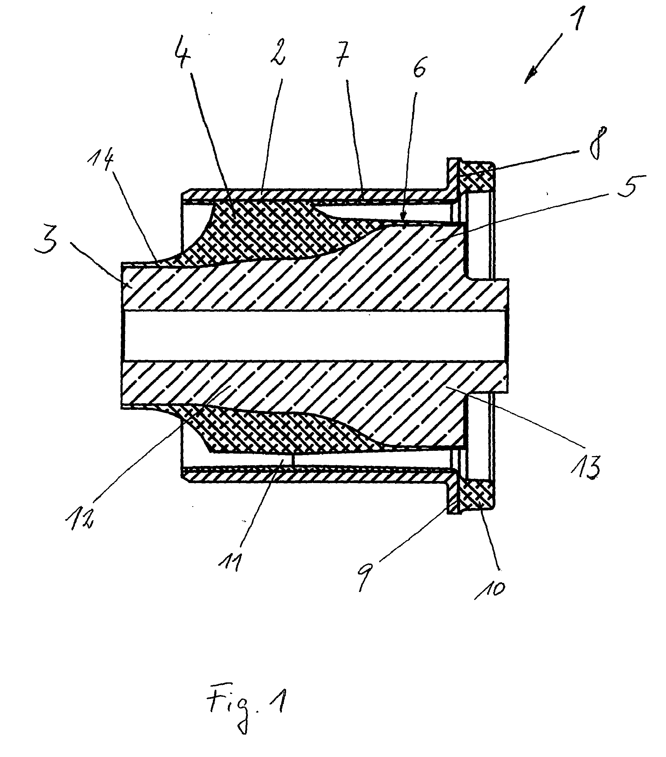

Fig. 1 das erfindungsgemäße Gummilager im Längsschnitt.

### Ausführung der Erfindung

Die Figur zeigt ein Gummilager 1, bestehend aus einer rohrförmigen Hülse 2 und einem zentrisch in der Hülse 2 angeordneten Kern 3. Die Hülse 2 und der Kern 3 bestehen aus einem metallischen Werkstoff und sind durch einen Federkörper 4 aus einem elastomeren Werkstoff, beispielsweise Naturkautschuk, miteinander verbunden. Dabei erfolgt die Montage des Federkörpers 4 so, dass dieser unter einer Vorspannung steht. Der Kern 3 besteht aus einem ersten Abschnitt 12 mit einem kleinen Durchmesser und aus einem zweiten Abschnitt mit einem großen Durchmesser 13. Der zweite Abschnitt bildet die Verdickung 5. Der Federkörper 4 und die Verdickung 5 sind in axialer Richtung beabstandet voneinander angeordnet, wobei der Federkörper 4 dem ersten Abschnitt des Kerns 3 zugeordnet ist. Der Kern 3 und insbesondere auch die Verdickung 5 sind mit einer Elastomerschicht 14 bedeckt. Diese Elastomerschicht 14 bildet im Bereich der Verdickung 5 einen Anschlagpuffer 6. Die Hülse 2 ist innenumfangsseitig ebenfalls mit einer Schicht 7 aus elastomerem Material bedeckt. Die Hülse 2 weist an einer Stirnseite 8, in dieser Ausgestaltung die der Verdickung 5 zugeordneten Stirnseite 8 einen umlaufenden Bund 9 auf. Die Herstellung des Bundes 9 erfolgt durch umbördeln der Stirnseite 8 der Hülse 2 nach außen. An dem Bund 9 ist an der freien Seite ein Axial-Anschlagpuffer 10 aus elastomerem Material befestigt. Der Federkörper 4, der Anschlagpuffer 6, die Schicht 7 und der Axial-Anschlagpuffer 10 sind materialeinheitlich und einstückig ausgebildet. Der Federkörper 4 ist in axialer Richtung mit vier gleichmäßig über dem Umfang verteilten Ausnehmungen 11 versehen.

## Patentansprüche

1. Gummilager (1), umfassend eine Hülse (2) und einen in der Hülse (2) angeordneten Kern (3) die durch einen Federkörper (4) miteinander verbunden sind, wobei der Kern (3) eine Verdickung (5) aufweist, **dadurch gekennzeichnet, dass** der Federkörper (4) und die Verdickung (5) in axialer Richtung beabstandet voneinander angeordnet sind.

2. Gummilager nach Anspruch 1, **dadurch gekennzeichnet, dass** die Verdickung (5) außenumfangsseitig mit einem Anschlagpuffer (6) aus elastomerem Material versehen ist.

3. Gummilager nach Anspruch 1 oder 2, **dadurch gekennzeichnet, dass** die Hülse (2) innenumfangsseitig mit einer Schicht (7) aus elastomerem Material bedeckt ist.

4. Gummilager nach Anspruch 3, **dadurch gekennzeichnet, dass** der Federkörper (4), der Anschlagpuffer (6) und die Schicht (7) materialeinheitlich und einstückig ausgebildet sind.

5. Gummilager nach einem der Ansprüche 1 bis 4, **dadurch gekennzeichnet, dass** die Hülse (2) an zumindest einer Stirnseite (8) einen umlaufenden Bund (9) aufweist.

6. Gummilager nach Anspruch 5, **dadurch gekennzeichnet, dass** der Bund (9) mit einem Axial-Anschlagpuffer (10) aus elastomerem Material versehen ist.

7. Gummilager nach einem der Ansprüche 1 bis 6, **dadurch gekennzeichnet, dass** der Federkörper (4) in axialer Richtung verlaufenden Ausnehmungen (11) aufweist.

8. Gummilager nach Anspruch 7, **dadurch gekennzeichnet, dass** in dem Federkörper (4) vier gleichmäßig über den Umfang verteilte Ausnehmungen (11) vorgesehen sind.
